# EUROPEAN PATENT APPLICATION

(11) **EP 4 763 556 A1**
(43) Date of publication of application: **24.06.2026**
(21) Application number: 25223301.0
(22) Date of filing: 15.12.2025
(51) Int. Cl.: B60J 5/04, B62D 35/00

(54) **SIDE DOOR FOR A MOTOR VEHICLE DEFINING AN AERODYNAMIC DUCT**

(30) Priority: 17.12.2024 IT 202400028731
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A side door (4) for a motor vehicle (1) has coupling means (40) configured to couple the side door (4) to a door frame (7) of the motor vehicle (1) at an access opening (10) defined by the door frame (7) to provide side access to a passenger compartment (6) of the motor vehicle, such that the side door (4) is movable between an open position and a closed position to expose and close the access opening (10), respectively, a structural body (43) arranged to face the passenger compartment (6) in the closed position of the side door (4), and a covering sheet (44) fixed to the structural body (43) to cover the structural body (43) externally, characterized by the covering sheet (44) forming a slot (45) configured to define a first longitudinal duct (45b).

## Description

### CROSS-REFERENCE TO RELATED APPLICATIONS

This patent application claims priority from Italian patent application no. 102024000028731 filed on December 17, 2024, the entire disclosure of which is incorporated herein by reference.

### TECHNICAL FIELD

The invention relates to a side door for a motor vehicle, in particular longitudinally adjacent to a front wheel well of the motor vehicle.

### PRIOR ART

As is known, the chassis of a motor vehicle includes a portion or cell of the chassis defining a motor vehicle passenger compartment.

In addition, the chassis portion includes a door frame for attaching a side door that defines a side access to allow access into the passenger compartment, particularly for a driver.

The door frame includes two pillars, one of which is further forward (specifically called the "A pillar") and one more rearward (specifically called the "B pillar"), and a lower longitudinal beam (also called the under-door beam or door sill) extending longitudinally at least partially between the pillars and connects them, being attached to them.

The pillars therefore protrude vertically or, more precisely, upwards from the longitudinal beam, thus delimiting a lower portion of the side access with the latter.

During the advancement of the motor vehicle, the front pillar is normally subjected to aerodynamic pressure, in particular due to an aerodynamic flow from the front of the motor vehicle through a front wheel well, which in turn is defined or delimited above by a corresponding wheel arch, and facing or otherwise communicating with the front pillar.

Therefore, there is a need to decrease the aerodynamic pressure at the pillar or more generally in the wheel well, that is, more precisely, in the volume between a front wheel housed in the wheel well and the front pillar.

One purpose of the invention is to respond to the need described above, preferably in a simple and reliable way.

### DESCRIPTION OF THE INVENTION

The purpose is achieved with a side door as defined in claim 1.

The dependent claims define particular embodiments of the invention.

### BRIEF DESCRIPTION OF THE DRAWINGS

To better understand the invention, one embodiment thereof is described hereinafter by way of non-limiting example and with reference to the accompanying drawings, wherein:
- Figure 1 is a perspective view of a motor vehicle comprising a side door according to the invention,

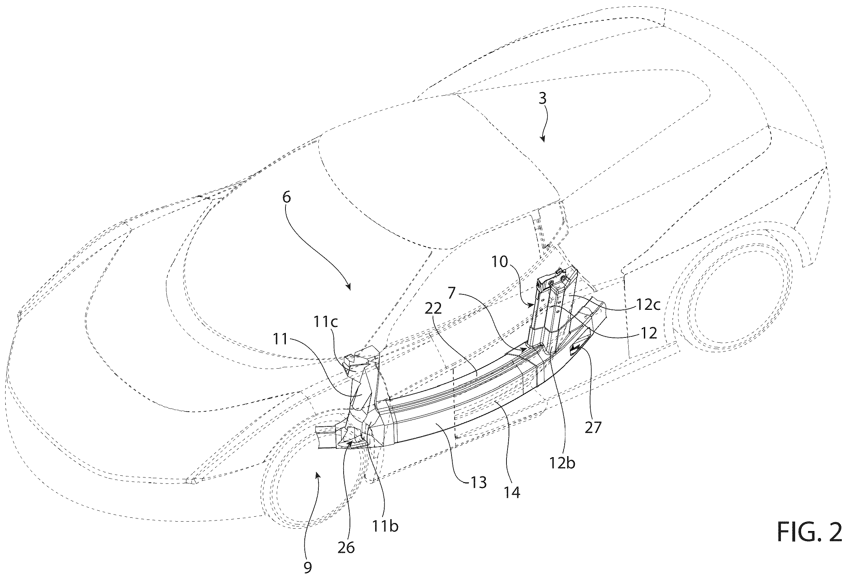

- Figure 2 is similar to Figure 1 but with parts of the motor vehicle being transparent so that a portion of the motor vehicle chassis is visible,

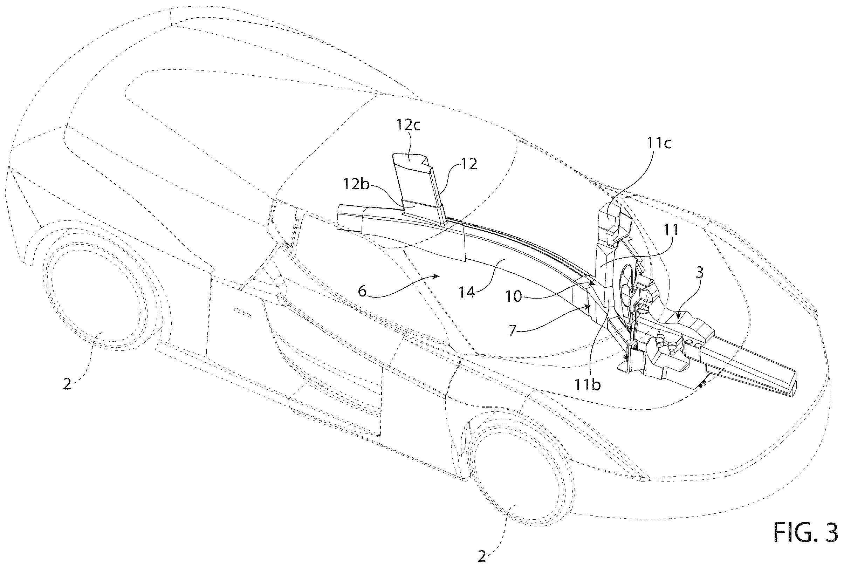

- Figure 3 is another perspective view of the motor vehicle as illustrated in Figure 2 from a separate perspective viewpoint,
- Figure 4 is a perspective view, on an enlarged scale, of a front detail of the motor vehicle,

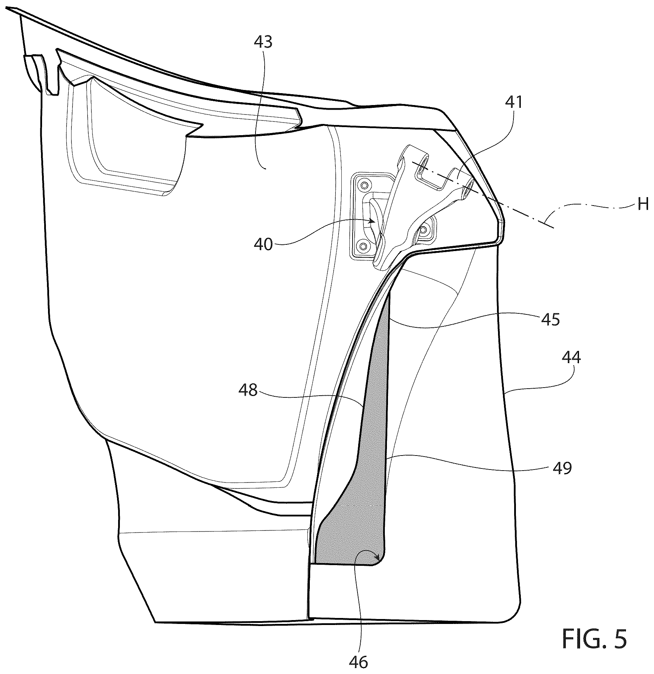

- Figure 5 is a perspective view, on an enlarged scale of the side door,
- Figure 6 is a perspective view of the detail in Figure 4 from a different perspective viewpoint,
- Figure 7 is a perspective view of one side of the vehicle, and
- Figure 8 is a cutaway view of the side door and an adjacent longitudinal beam of the motor vehicle on a horizontal cross-section plane.

### EMBODIMENTS OF THE INVENTION

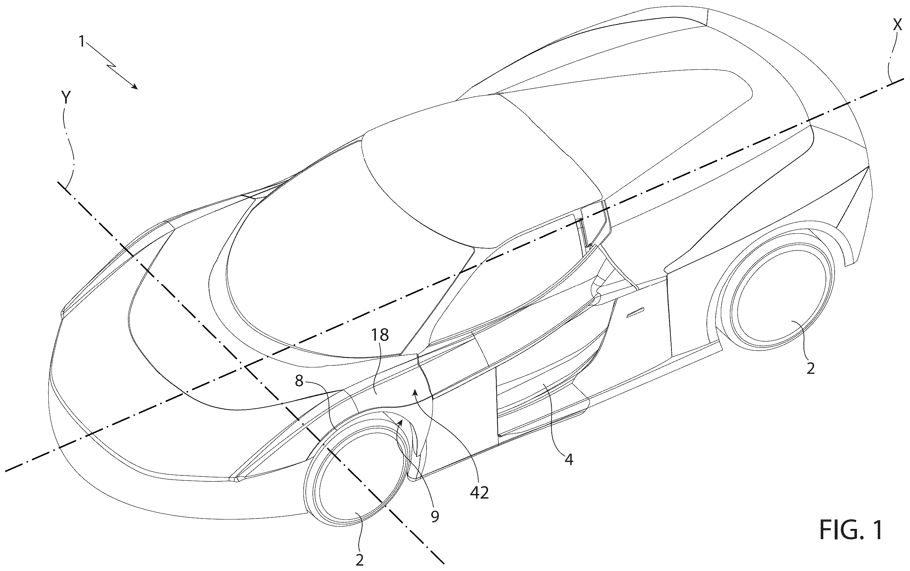

In Figure 1, the reference number 1 is used to indicate, as a whole, a motor vehicle.

The motor vehicle 1 comprises multiple wheels 2 and a chassis 3, in particular suspended relative to the wheels 2 by means of suspensions, for example of a known type not illustrated.

The motor vehicle 1 has a normal advancing direction along a longitudinal axis or roll axis X of the motor vehicle 1. The advancing direction is also applicable to the chassis 3, as the latter is intended to be part of the motor vehicle 1.

Henceforth, expressions such as front, rear, in front of, behind, forward, rearward, and the like are to be understood with reference to the advancing direction.

Similarly, expressions such as lower, upper, above, below, superiorly, inferiorly, high, low, and the like shall be understood with reference to the normal conditions of use of the motor vehicle 1 for which the chassis 3 is intended.

The chassis 3 defines a passenger compartment 6, which is more generally part of the motor vehicle 1. The chassis 3 or more generally the motor vehicle 1 preferably comprises a wheel arch 8 defining, in particular below it, a wheel well 9 intended to accommodate one of the wheels 2.

The chassis 3 or the motor vehicle 1 comprises at least one door frame 7 for the coupling or attachment of a side door 4 of the motor vehicle. In particular, the wheel well 9 is arranged in front of the door frame 7.

The door frame 7 defines or delimits and in particular circumscribes (that is, internally delimits) an access opening 10 to allow side access to the passenger compartment 6.

The motor vehicle 1 comprises a coupling device 40 configured to couple the side door 4 to the door frame 7 at the access opening 10.

The door 4 is coupled to the door frame 7 in a movable manner between an open and a closed position, respectively, for or so as to expose or open outwards and close the access opening 10.

The door frame 7 comprises at least two pillars 11, 12 and a longitudinal beam 13, in particular an under-door beam or door sill.

The first pillar 11 is further forward than the other pillar 12. The pillars 11, 12, independently and preferably, define the longitudinal limits or ends (that is, according to the advancing direction) of the access opening 10. The pillars 11, 12 therefore define the so-called A-pillar and B-pillar of the door frame 7.

The coupling device 40 preferably comprises a door hinge 41 configured to hinge the door 4 onto the door frame 7 and, more particularly, at the pillar 11, for example around a hinge axis H, so that the door 4 is rotatable between the open and closed position around the hinge axis H.

The door 4 preferably forms part of a side 42 of the motor vehicle 1, including, for example, the wheel arch 8 and/or a mudguard 18 defining, in particular, the wheel arch 8. The door 4, in particular in the closed position, is longitudinally adjacent to the mudguard 18, more specifically to the rear of the mudguard 18.

The door 4 comprises a structural body or internal structure 43 arranged to face towards the passenger compartment 6 in the closed position of the door 4.

The structural body 43 might also not directly face the passenger compartment 6; for example, the structural body 43 might be covered (partially or entirely) on the innermost side of the door 4 with respect to the passenger compartment 6 with one or more interior trim(s) (not illustrated) of the door 4.

In addition, the door 4 comprises a covering sheet or panelling 44 (in practice, in automotive jargon, a skin) fixed to the structural body 43, in particular on the outermost side of the door 4 (with respect to the passenger compartment 6), to externally cover the structural body 43.

On the outer side, preferably, the covering sheet 44 entirely covers the structural body 43.

By way of illustration and not necessarily imposing limits, the covering sheet 44 could be defined by several walls joined or seamlessly connected, that is, continuously or in such a way as to form a single body or single piece.

The covering sheet 44 forms or is shaped to form a slot 45 configured to define a longitudinal duct 45b, that is, directed along or according to the outer profile of the side 42 with the door 4 in the closed position. In other words, the slot 45 or duct 45b is tangent to the side 42 or its outer profile.

The duct 45b is arranged and oriented, that is, it is configured to be exposed to an aerodynamic flow generated during the forward movement of the motor vehicle 1 with the door 4 in the closed position. In this way, part of the aerodynamic flow is channelled along the duct 45b tangentially to the outer profile of the side 42.

The duct 45b or slot 45 has an inlet opening 46 and, more in particular, extends longitudinally between the inlet opening 46 and an outlet opening 47, even more in particular arranged behind the inlet opening 46.

The inlet opening 46 and, independently, the outlet opening 47 (defining the longitudinal ends of the duct 45b) face towards the front and rear of the motor vehicle 1, respectively, with the door 4 in the closed position.

The duct 45b has a longitudinal axis R, that is, it extends longitudinally along the axis R, in particular between the inlet opening 46 and outlet opening 47.

The outlet opening 47 is, conveniently, directly exposed to the outside of the door 4 and the motor vehicle 1.

The axis R is preferably curvilinear.

In particular, the covering sheet 44 bifurcates (more particularly from top to bottom) into two side walls 48, 49, of which, for example, the wall 48 is more internal (with respect to the passenger compartment 6) than the wall 49, which face each other so as to define the slot 45 and the associated duct 45b.

In other words, the covering sheet 44 has the side walls 48, 49 (one laterally innermost and the other laterally outermost), which face each other and define the slot 45 and the corresponding duct 45b therebetween.

The side walls 48, 49 are arranged transversal or orthogonal to a pitch axis Y of the motor vehicle 1, that is, a transversal or lateral axis of the door 4 (transversal to the longitudinal dimension of the door 4), which in turn is transversal or orthogonal to the advancing direction of the motor vehicle 1.

Therefore, the side walls 48, 49 face each other according to the transversal axis of the door 4 or the pitch axis Y.

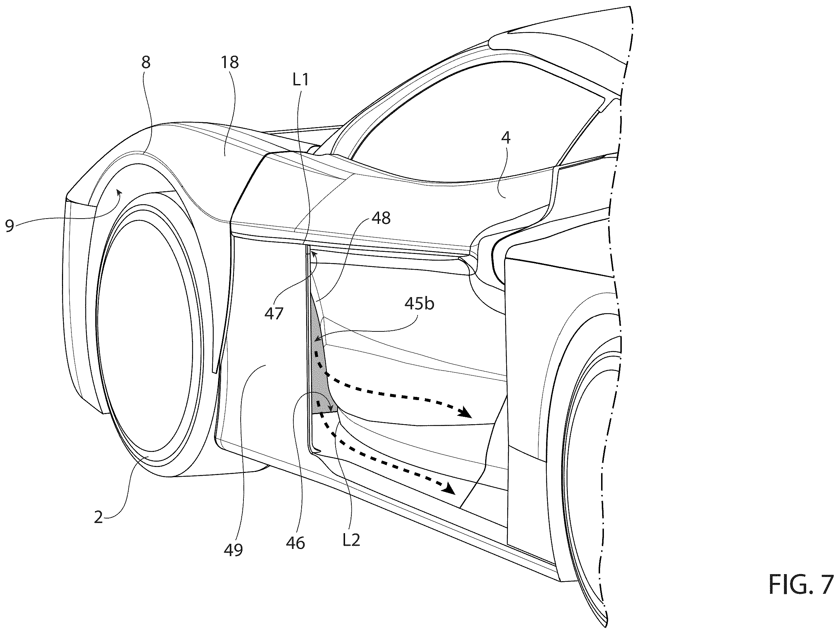

More precisely, as can be seen, for example, from Figure 7, according to a non-limiting embodiment, the side wall 48 has a further forward portion aligned in parallel with the side wall 49 according to the pitch axis Y, that is, covered externally by the side wall 49 according to the pitch axis, and a more rearward portion directly exposed or uncovered to the outside of the door 4 and the motor vehicle 1, that is, not aligned in parallel with the side wall 49 according to the pitch axis Y.

According to another viewpoint, the side wall 49 may be considered as an ear or outer band extending from the side wall 48 and terminating at the side wall 48, substantially forming a bridge from an (upper) portion of the side wall 48 to another (lower) portion of the same side wall 48.

More precisely, the door 4 has several longitudinal profiles, that is, longitudinal profile lines or longitudinal profile curves L1, L2, for example, curvilinear. The longitudinal profile lines L1, L2 are distinct from each other.

The outer surfaces of the door 4 or covering sheet 44 extend longitudinally along a plurality of longitudinal profile lines or curves, including the lines L1, L2, forming the surfaces themselves.

Specifically, during the advancement of the motor vehicle 1, the aerodynamic flow flows over the covering sheet 44 tangentially along the longitudinal profile lines L1, L2.

Specifically, the covering sheet 44 bifurcates in the walls 48, 49 at or from the longitudinal profile line L1; then, the walls 48, 49 rejoin at the longitudinal profile line L2.

In other words, the longitudinal profile lines L1, L2 are the lines where the walls 48, 49 ideally merge between them.

Thus, the slot 45 defines in practice an "eyelet" that, in particular, opens and closes at the longitudinal profile lines L1, L2.

The longitudinal profile line L1 is arranged above or superiorly to the longitudinal profile line L2.

The axis R preferably extends (in particular vertically) between the longitudinal profile lines L1, L2.

Alternatively or additionally, the axis R extends between the walls 48, 49, in particular laterally or according to the pitch axis Y.

The inlet opening 46 preferably faces, in particular directly, the wheel well 9 with the door 4 in the closed position.

In other words, the inlet opening 46 communicates with the wheel well 9 to receive part of the incoming aerodynamic flow.

The inlet opening 46 is located behind, specifically immediately behind, the wheel well 9, with the door 4 in the closed position.

The pillars 11, 12 extend upwards or vertically from their respective lower ends 11b, 12b towards or up to their respective upper ends 11c, 12c.

The longitudinal beam 13 is fixed and more particularly welded to the pillars 11, 12 at the lower ends 11b, 12b.

Thus, the longitudinal beam 13 defines a lower longitudinal element of the door frame 7 and, more in particular, defines, at least in part, the lower end of the door frame 7.

The longitudinal beam 13 preferably is or comprises a tubular or box-shaped beam. Independently and preferably, each of the pillars 11, 12, taken individually and independently of the other, may be or comprise at least one casting element, that is a beam obtained by casting molten metal in respective moulds; the casting element is essentially solid, that is, it occupies a solid volume except for holes or hollow parts formed on a minor portion of its extension.

In other words, while the volume occupied by the longitudinal beam 13 is for the most part (for example, more than 70%) empty, the respective volumes occupied by the casting elements of the pillars 11, 12 are for the most part solid (that is, more than 70%). Clearly, the expressions solid and empty refer to the presence or absence of solid material, respectively.

The longitudinal beam 13 comprises a beam portion 14 that extends longitudinally between the lower ends 11b, 12b.

In detail, for example, the beam portion 14 is an intermediate portion of the longitudinal beam 13, whereby the latter may comprise a front end 16 and/or a rear end 17 according to the advancing direction.

More specifically, the ends 16, 17, independently of each other, interpenetrate the lower ends 11b, 12b.

Here, the end 16 terminates at the lower end 11b.

In particular, independently, the end 17 terminates downstream of the pillar 12 or the lower portion 12b according to a (longitudinal) direction opposite the advancing direction.

Here, the lower portion 12b protrudes cantilevered from the end 17, which in particular runs longitudinally below the lower portion 12b.

According to an alternative not illustrated, the end 17 may terminate at the lower end 12b, for example like the end 16 in the illustrated embodiment.

On the other hand, the beam portion 14 is longitudinally delimited by or between the pillars 11, 12 or more precisely by or between their lower portions 11b, 12b.

The beam portion 14, as well as more generally the longitudinal beam 13, extends longitudinally along an axis K, for example curvilinear and in particular concave towards the passenger compartment 6.

The beam portion 14 has two side walls 20, 21 facing each other according to a direction transversal to the axis K and of which the wall 20 is the laterally most internal or nearest to the passenger compartment 6 (in other words, the wall 21 is the laterally most outwardly exposed of the motor vehicle 1 or furthest away from the passenger compartment 6) .

In addition, the beam portion 14 has an upper wall and a lower wall 22, 23, each coupled with both side walls 20, 21 to close the cross section of the beam portion 14 with respect to the axis K.

The beam portion 14 is internally hollow, thus defining a duct portion 24 extending, in particular, across the entire longitudinal extension (particularly along the axis K) of the beam portion 14.

The duct portion 24 may also extend so as to be partly defined by the beam portion 14, and partly defined by the end 16 or completed by the cavity defined by the end 16.

The walls 20, 21, in particular together with the walls 22, 23, delimit the duct portion 24; the duct portion 24 is laterally delimited between the walls 20, 21.

The door frame 7 preferably comprises a through duct 25 extending longitudinally through at least the pillar 11 or, more precisely, the lower portion 11b and the longitudinal beam 13 (or at least a part thereof).

The duct 25 has an inlet opening 26 upstream of the beam portion 14 according to the direction opposite to the advancing direction. In particular, the inlet opening 26 is on the pillar 11 or more precisely on the lower portion 11b.

In addition, the duct 25 has an outlet opening 27 upstream of the beam portion 14 according to the direction opposite to the advancing direction.

The duct 25 extends longitudinally between the inlet opening 26 and outlet opening 27, whereby it begins and ends with the inlet opening 26 and outlet opening 27, respectively.

The openings 26, 27 communicate with the outside of the chassis portion or chassis 3 or, more precisely, of the motor vehicle 1. Here, in the description, the "outside" means the outside of the passenger compartment 6 or the opposite side to the passenger compartment 6.

The inlet opening 26, as well as the beam portion 14, is arranged in front of the outlet opening 27 according to the advancing direction.

The ducts 45b, 25 preferably extend longitudinally in parallel to each other (with the door 4 in the closed position), in particular from the wheel well 9 via the inlet openings 46, 26.

The duct 25 is positioned more internally than the duct 45b with respect to the passenger compartment 6 or according to the pitch axis Y.

Conveniently, the inlet openings 46, 26 are arranged side by side, that is, along the pitch axis Y.

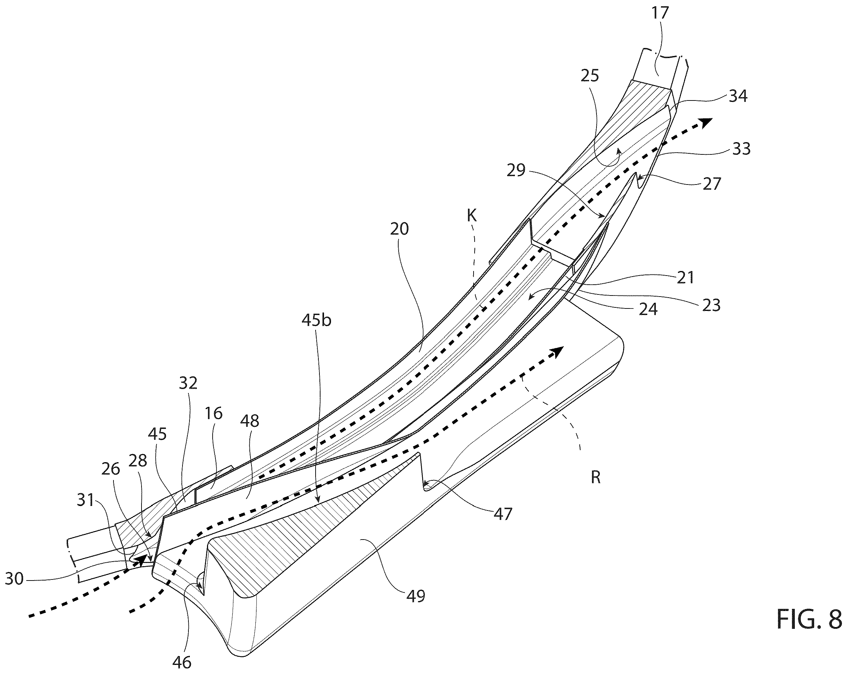

According to a non-limiting embodiment, as for example illustrated in Figure 8, the duct 25 has at least one portion arranged at the same vertical height as a portion of the duct 45b.

In the illustrated embodiment, the outlet opening 27 is on the longitudinal beam 13, in particular on the end 17 and more specifically downstream or below the pillar 12 or the lower portion 12b according to the direction opposite the advancing direction.

In other words, the outlet opening 27 is on the part of the end 17 with the pillar 12 longitudinally (or along the axis K) between the beam portion 14 and the same part of the end 17.

Alternatively, the outlet opening 27 may be on the pillar 12 or more precisely on the lower portion 12b.

The inlet opening 26, preferably, and independently the outlet opening 27, face towards the outside of the motor vehicle 1 (on the opposite side with respect to the passenger compartment 6), that is, they are respectively arranged on faces of the pillar 11 and the longitudinal beam 13 or of the pillar 12 facing towards the outside of the motor vehicle 1 (on the opposite side with respect to the passenger compartment 6).

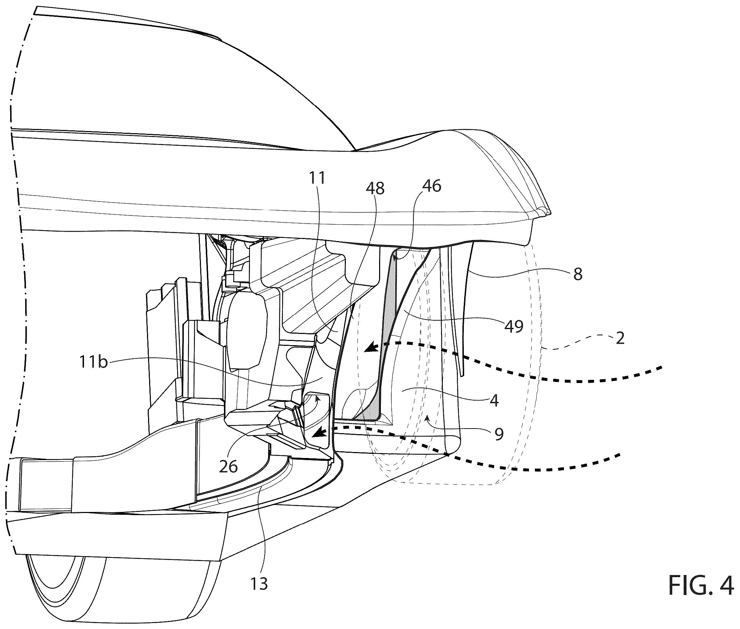

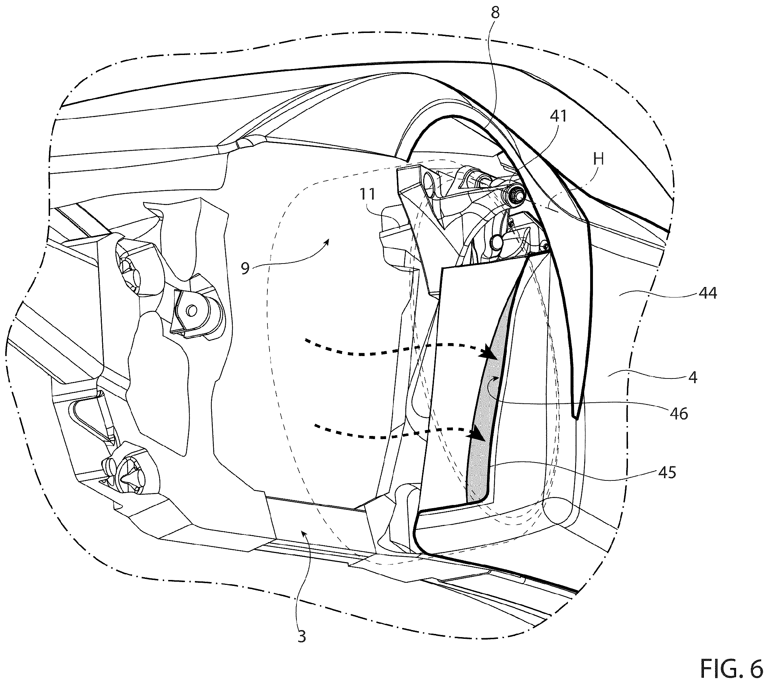

In particular, the inlet opening 26 faces, or at least communicates with, the wheel well 9. As visible, for example, in Figures 4, 6, according to a non-limiting embodiment, the inlet opening 26 directly faces the wheel well 9.

Conveniently, the axis K of the longitudinal beam 13 is also the axis of the duct 25, that is, the axis along which the duct 25 extends longitudinally.

The inlet opening 26 is arranged to catch part of the aerodynamic flow of the motor vehicle 1 during the advancing thereof along the advancing direction.

In particular, the inlet opening 26 faces towards a front of the motor vehicle 1 or the chassis portion; in other words, the axis K at the inlet opening 26 has at least one component along the advancing direction and preferably also another lateral component towards the passenger compartment 6.

The outlet opening 27 defines an outlet opening for the part of the aerodynamic flow drawn through the inlet opening 26 to the rear of the motor vehicle 1 or chassis portion.

In particular, the outlet opening 27 faces towards the rear of the motor vehicle 1 or the chassis portion; in other words, the axis K at the outlet opening 27 has at least one component along the opposite direction to the advancing direction and preferably also another lateral component towards the passenger compartment 1.

The duct 25 comprises the duct portion 24 and further comprises, in particular, a through hole 28 through the pillar 11 or lower portion 11b. The through hole 28 begins with the inlet opening 26 and communicates with the duct portion 24.

The duct 25 preferably comprises another duct portion 29 downstream of the duct portion 24 according to the direction opposite to the advancing direction.

The duct 29 portion communicates with the duct portion 24 and terminates in the outlet opening 27.

In detail, the duct portion 29 is defined by the end 17; alternatively, the duct portion 29 could (particularly in the case of the outlet opening 27 on the pillar 12) have been defined by the pillar 12 or the lower portion 12b, for example as a through hole through the pillar 12 or the lower portion 12b, the through hole communicating with the duct 24 portion.

The inlet opening 26 has or is bounded by a contour 30 defined by the pillar 11. The contour 30 has a foremost portion or edge 31 according to the advancing direction.

The edge 31 is connected to the wall 20 via a fillet 32 defined by a surface of the pillar 11 or the lower portion 11b laterally delimiting the duct 25 or more precisely the hole 28. In other words, the fillet 32 is an internal surface of the pillar 11 and/or defining a part of the hole 28.

With the fillet 32, the wall 20 extends with structural continuity from the pillar 11, so that the forces applied on the pillar 11 can propagate along the longitudinal beam 13 with continuity, that is, without encountering discontinuities or empty parts in the passage from the pillar 11 to the longitudinal beam 13.

Similarly, albeit independently, the outlet opening 27 has or is delimited by a contour 33 having a rearmost portion or edge 34 according to the advancing direction.

The edge 34 is connected to the wall 20 by a fillet 35 defined at least in part by a surface of the pillar 12 or the longitudinal beam 13 (in particular of the end 17) laterally delimiting the duct 25 or more precisely the duct portion 29.

From the above, the advantages of the door 4 according to the invention are clear.

Thanks to the duct 45b, the aerodynamic flow in the area of the wheel well 9 has a longitudinal path along the axis R passing between the walls 48, 49 of the covering sheet 44 and flowing out towards the rear of the motor vehicle 1 or the chassis 3.

The function of the duct 25 is in synergy with that of the duct 45b, as the aerodynamic flow is divided in parallel between the duct 25 and the other duct 45b, so that the first duct 25 represents an additional outlet for the aerodynamic flow in the wheel well 9.

In this way, the pressure exerted by the aerodynamic flow on the pillar 11 drops dramatically.

Since the inlet opening 26 and the outlet opening 27 are upstream and downstream of the beam portion 14, the latter can define the duct 24 portion of the duct 25 despite being devoid of holes, in particular on the walls 20, 21. This is extremely advantageous, since the beam portion 14 is a very important load-bearing element of the chassis portion, in particular since it is the load-bearing element on which practically the entire chassis 3 is supported; the presence of holes on the beam portion 14 would be particularly pernicious, since, in addition to introducing serious aerodynamic disturbances, it would also introduce the need to reinforce and thus weigh down the longitudinal beam 13.

Finally, it is clear that changes may be made to the door 4 according to the invention, and variations produced thereto, that, in any case, do not depart from the scope of protection defined by the claims.

In particular, the shape of each of the components described and illustrated could be different, with particular reference to the pillars 11, 12, the longitudinal beam 13, as well as the door 4 itself and its components.

Finally, expressions such as "upstream of" and "downstream of", according to the direction opposite to the advancing direction, can alternatively be rendered as "in front of" and "behind", in particular with reference, again, to the advancing direction.

## Claims

1. A side door (4) for a motor vehicle (1) having a longitudinal advancing direction, the side door (4) comprising
- coupling means (40) configured to couple the side door (4) to a door frame (7) of the motor vehicle (1) at an access opening (10) defined by the door frame (7) to provide side access to a passenger compartment (6) of the motor vehicle, such that the side door (4) is movable between an open position and a closed position to expose and close the access opening (10), respectively,
- a structural body (43) arranged to face towards the passenger compartment (6) in the closed position of the side door (4), and
- a covering sheet (44) fixed to the structural body (43) to cover the structural body (43) externally,
**characterized by** the covering sheet (44) forming a slot (45) configured to define a first longitudinal duct (45b), in particular for an aerodynamic flow generated by an advance of the motor vehicle (1).

2. The door according to claim 1, wherein the covering sheet (44) bifurcates, in particular at a first longitudinal profile line (L1), into a first and a second side wall (48, 49) facing each other, thereby defining the slot (45) and the related first duct therebetween, the first and the second side wall (48, 49) rejoining in particular at a second longitudinal profile line (L2).

3. The door according to claim 2, wherein the first duct (45b) has a first longitudinal axis (R), for example curvilinear, between the first and second side walls (48, 49).

4. The door according to any one of the preceding claims, the door being intended to be part of a side (42) of the motor vehicle (1), wherein the first longitudinal duct (45b) is configured to be tangential to an outer profile of the side (42).

5. A motor vehicle (1) comprising the side door (4) according to any one of the preceding claims, the passenger compartment (6), and the door frame (7) defining the access opening (10), the side door (4) being coupled to the door frame (7) via the coupling means (40), wherein the motor vehicle (1) further comprises a wheel arch (8) defining a wheel well (9) to accommodate a wheel (2), wherein the first duct has a first inlet opening (46) facing the wheel well (9) with the side door (4) in the closed position.

6. The motor vehicle according to claim 5, wherein the first duct (45b) extends between the first inlet opening (46) and an outlet opening (47) directly exposed on the outside of the door (4) and the motor vehicle (1).

7. The motor vehicle according to claim 5 or 6, wherein the door frame (7) comprises
- a first and a second pillar (11, 12) extending upwardly from respective lower ends (11b, 12b) towards respective upper ends (11c, 12c), the first pillar (11) being more forward than the second pillar (12) according to the advancing direction of the motor vehicle,
- a longitudinal beam (13) fixed to the first and second pillars (11, 12) at the lower ends (11b, 12b) and having a beam portion (14) extending longitudinally between the lower ends (11b, 12b),
- a second duct (25) extending longitudinally at least through the first pillar (11) and the longitudinal beam (13) with a second inlet opening (26) and an outlet opening (27) respectively upstream and downstream of said beam portion (14) according to a further direction opposite to the advancing direction of the motor vehicle (1).

8. The motor vehicle according to claim 7, wherein the second inlet opening (26) is on the first pillar (11).

9. The motor vehicle according to claim 8, wherein the second inlet opening (26) faces the wheel well (9).

10. The motor vehicle according to claim 9, wherein the first duct (45b) and the second duct (25) extend longitudinally parallel to each other from the wheel well (9) via the first and second inlet openings (46, 26) respectively.

11. The motor vehicle according to any one of claims 7 to 9, wherein the first and second inlet openings (46, 26) are arranged laterally side by side with each other, and/or wherein the second duct (25) is positioned more internally than the first duct (45b) with respect to the passenger compartment (6).

12. The motor vehicle according to any one of claims 7 to 11, wherein the outlet opening (27) is on the second pillar (12) or on a portion of a rear end (17) of the longitudinal beam (13), the second pillar (12) being arranged longitudinally between said beam portion (14) and said portion of the rear end (17).

13. The motor vehicle according to any one of claims 7 to 12, wherein said beam portion (14) extends longitudinally along a second longitudinal axis (K), for example curvilinear, and has a third and a fourth side walls (20, 21) laterally delimiting the second duct (25) and facing each other according to a direction transversal to the second longitudinal axis (K), the third wall (20) being more internal than the fourth wall (21) with respect to the passenger compartment (6).

14. The motor vehicle according to claim 13, wherein the first pillar (11) defines a contour (30) of the second inlet opening (26), the contour (30) having a foremost first edge (31) according to the advancing direction, wherein the first edge (31) is connected to the third wall (20) by a first fillet (32) defined by a first surface of the first pillar (11), the first surface laterally delimiting the second duct (25).

15. The motor vehicle according to claim 13 or 14, wherein the outlet opening (27) is delimited by a contour (33) having a rearmost second edge (34) according to the advancing direction, wherein the second edge (34) is connected to the third wall (20) via a second fillet (35) defined at least in part by a second surface of the second pillar (12) or the longitudinal beam (13), the second surface laterally delimiting the second duct (25).
